# EUROPEAN PATENT SPECIFICATION

(11) **EP 1 552 512 B1**
(45) Date of publication and mention of the grant of the patent: **29.11.2006**
(21) Application number: 03798994.4
(22) Date of filing: 17.09.2003
(51) Int. Cl.: G11B 7/24

(54) **OPTICAL RECORD CARRIER FOR USE WITH UV LASER BEAM**
OPTISCHER AUFZEICHNUNGSTRûGER ZUR VERWENDUNG MIT EINEM UV-LASERSTRAHL
SUPPORT D'ENREGISTREMENT OPTIQUE FONCTIONNANT AVEC UN FAISCEAU LASER ULTRAVIOLET

(30) Priority: 02.10.2002 EP 02079091
(43) Date of publication of application: 13.07.2005
(73) Proprietor: Koninklijke Philips Electronics N.V., 5621 BA Eindhoven (NL)
(72) Inventor: MIJIRITSKII, Andrei, NL-5656 AA Eindhoven (NL); MEINDERS, Erwin, R., NL-5656 AA Eindhoven (NL)
(74) Representative: Uittenbogaard, Frank
(86) International application number: PCT/IB2003/004067
(87) International publication number: WO 2004/032128

(56) References cited:
- EP-A- 0 731 454
- EP-A- 1 182 654
- US-A- 5 875 052
- US-A1- 2001 016 242
- PATENT ABSTRACTS OF JAPAN vol. 010, no. 354, 28 November 1986 (1986-11-28) & JP 61 151841 A (HITACHI), 10 July 1986 (1986-07-10)

## Description

The present invention relates to an optical record carrier for recording information using a light beam in the UV (Ultraviolet) wavelength range, in particular having a wavelength in the range from 230-270 nm.

Optical record carriers have seen an evolutionary increase in the data capacity by increasing the numerical aperture of the objective lens and a reduction of the laser wavelength. The total data capacity was increased from 650 Mbyte (CD, NA=0.45,λ =780 nm) to 4.7 Gbyte (DVD, NA=0.65, λ =670 nm) to 25 Gbyte for the Blu-ray Disc (BD, NA=0.85, λ =405 nm,). The BD data density was derived from the DVD capacity by optical scaling. To achieve a further increase in data density one possibility is to further reduce the laser wavelength into the UV wavelength range. Suitable UV lasers will become available in the near future.

EP0731454 A1 discloses an optical recording method, optical recording apparatus and optical recording medium for use with a UV laser. A UV laser having a wavelength in the range from 190 to 370 nm and a lens having a numerical aperture of 0.4 or less shall be used to record identification information of the recording medium in a subsidiary information recording area outside the information recording area where audio, video or character data are recorded.

US 2001/0016242 A1 discloses a high-density information recording medium which includes, over a substrate having a group shape, a recording layer, and three-layered thin films of a first interference layer, a second interference layer and an interface layer having mutually different compositions and disposed on a laser beam incident side of the recording layer in order named from the laser beam incident side. The recording layer can, for instance, be made from alloys based on Ge, Sb and Te. Further, the use of lasers having a relatively short wavelength such as blue laser and ultraviolet laser is mentioned.

It is an object of the present invention to provide an optical record carrier for recording information by use of a UV light beam so that preferably an increase in data capacity can be achieved.

This object is achieved according to the present invention by an optical record carrier as claimed in claim 1 comprising a substrate layer (S) and a recording stack (R) comprising:
- two dielectric layers (31, 32) and
- an information layer (P) sandwiched between said dielectric layers, said information layer comprising a recording material for forming marks and spaces representing an information by irradiation of a UV light beam (L), wherein said recording material is an alloy comprising at least two materials of the group of materials containing Ge, Sb, Te, In, Se, Bi, Ag, Ga, Sn, Pb, As,
characterized in that said dielectric layers (31, 32) are made of a material of the group of materials containing C, NaCl, ZrO, LiF,KCl and
that a transparent cover layer (C) is provided on top of the side of the said record carrier facing the incident UV light beam (L), said cover layer being in particular made ofpolydimethylsiloxane and having a thickness in a range from 5 µm to 300 µm.

In the known optical record carriers such as CD, DVD and BD, the optical disc generally comprises a recording stack sandwiched between a polycarbonate substrate layer and a plastic cover layer. The data is written and read-out through the transparent polycarbonate substrate layer or cover layer of the disc. However, at said wavelength in the range of 230 to 270nm the currently used materials for said substrate and cover layers are not transparent for the laser radiation. According to the present invention either air incidence or cover incidence is preferably used for data recording and read-out, where the cover layer is made of materials transparent for incident UV light beam. In case of air incidence no cover layer or no substrate layer is arranged between the information layer and the incident UV light beam.

The recording stack proposed according to the present invention essentially comprises only two dielectric layers and an information layer sandwiched between said dielectric layers. The material for use as recording material in said information layer is selected based on the optical and thermal properties of the material such that it is suitable for recording using a UV light beam. It has thus been shown that a doped Sb-Te phase-change composition is a suitable material since suitable thermal and optical performance can be achieved with proper selection of dopants and stack designs.

Preferred embodiments of the invention are defined in the dependant claims. Preferred materials for use in the information layer are defined in claim 3. Thickness ranges for the information layer and the dielectric layers are defined in claims 2 and 4.

According to another preferred embodiment one or more metal heat sink layers are additionally provided as defined in claims 5 to 10. Such heat sink layers are required for quick heat removal (quenching) during writing to enable mark formation. At the same time such metal heat sink layers can also serve as a reflector to enhance the read-out of data and/or increase the absorption of the incident UV light beam by the recording layer. Such metal heat sink layers can be provided on top of both dielectric layers. In case, a metal heat sink layer is provided on the side where the UV light is incident the layer should be semi-transparent or fully transparent.

In further embodiments, as defined in claims 11 and 12, additional recording stacks separated by spacer layers and/or additional dielectric layers or multi-layer structures are foreseen.

Still further an additional cover layer is provided on top of the dielectric layer facing the incident UV light beam where a suitable material and a thickness range for said cover layer is mentioned. Said cover layer serves as protective coating to protect the information layer from scratches or the like.

Still further it might be preferred to provide an additional hard-coating layer on top of the dielectric layer facing the incident UV light beam or on top of the cover layer as defined in claim 13 where a suitable material and a thickness range for said cover layer are defined. Said cover layer serves as protective coating to protect the information layer from scratches or the like.

The invention will now be explained in more detail with reference to the drawings in which
Fig.1 shows the transmission of ZnS :Si0₂ (80: 20) as a function of thickness,
Fig. 2 shows the radial temperature profiles for CD, DVD, BD and UV conditions as a result of continuous laser heating,
Fig. 3 shows radial temperature profiles for CD, DVD, BD and UV conditions as a result of laser pulse heating,
Fig. 4 shows the transmission of some dielectric materials as a function of thickness,
Fig. 5 shows the reflection of some metals as a function of thickness,
Figs. 6a-f show different embodiments of a record carrier according to the present invention,
Fig. 7 shows the optical characteristics of the optical record carrier shown in Fig. 6a,
Fig. 8 shows the optical characteristics of the optical record carrier shown in Fig. 6d and
Fig. 9 shows the modelling result of mark formation simulation in a record carrier according to the present invention.

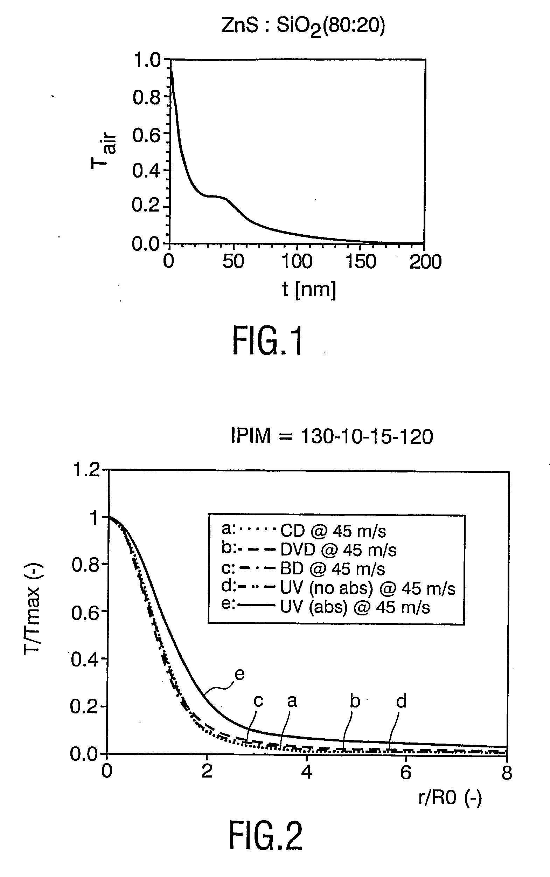

Most of the dielectric materials commonly used in current (DVD) and third generation (BD) phase-change optical record carriers absorb too much laser light at the UV recording wavelength in the range from 230 to 270nm. This has consequences for both the thermal and optical performance. For example, ZnS-SiO₂ - the material which is commonly used in optical recording stacks - has a rather high absorption coefficient in this wavelength range. Fig. 1 shows the transmission of a layer of ZnS-SiO₂ in air as a function of the layer thickness at 266nm wavelength (n=2.655; k=0.527). In a conventional IPIM recording stack, where I denotes the dielectric layers made of ZnS-SiO₂, P the phase-change information layer and M the metal heat sink layer, the significant absorption in the two dielectric layers leads to a much broader temperature distribution than would be predicted on the bases of optical scaling conditions. Since a broader temperature distribution will lead to broader marks and further to cross-write phenomena, the achieved data capacity will be of the same magnitude as that of the third generation BD record carrier.

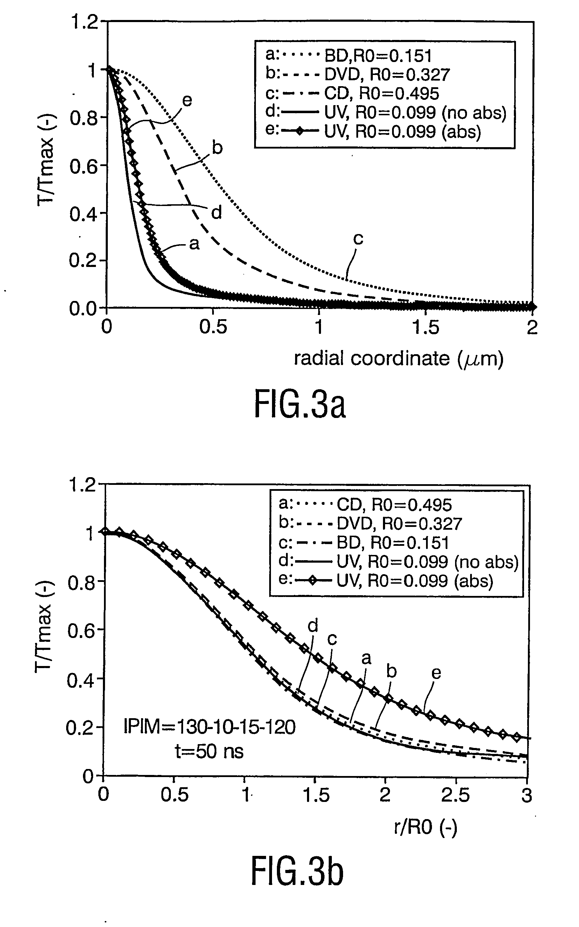

This is illustrated in Figs. 2 and 3. Therein the radial temperature distributions are shown for CD, DVD, BD and UV conditions as a result of continuous laser heating (Fig. 2), representing erasure of data, and pulse heating (Fig. 3), representing writing of data. In Fig. 2 and Fig. 3b, the radial coordinate is scaled with the radius of the optical spot. In Fig. 3 a, the data are plotted as a function of the radial coordinate. If no absorption in the dielectric layer is assumed for recording at UV conditions, the temperature profiles scale with the optical spot, as is the case for the other three systems (CD, DVD and BD). But in case of absorption, which is the case for ZnS-SiO₂, it can be seen that the temperature distribution in the phase-change layer broadens due to absorption in the adjacent dielectric layers. This can also be seen in Fig. 3 in which the BD-profile coincides with the UV-profile if a ZnS-SiO₂ dielectric layer is used.

If the temperature response for a short pulse is considered, heat diffusion is not relevant and the thermal response is more or less the optical response. But an erase level is always needed for direct overwrite and erasure of data. Even if erasing data in a separate erase cycle is considered, data in the neighbouring tracks will be erased as well due to the fact that the temperature distribution is much broader than the track pitch would be based on scaling issues.

The sensitivity of the recording stack is also dependent on the absorption in the dielectric layer. All optical energy that is absorbed in other layers than the phase-change information layer is in first order considered to be lost. In fact, the thermal resistance will increase and therefore less heat will flow to the insulating dielectric layers but this is considered to be a second order effect. To achieve optimum sensitivity with respect to write power, the laser light should preferably be absorbed in the information layer.

Read-out of data need to be done with relatively low powers. If the absorption of the dielectric layers is too high, signal-to-noise ratio of the read-out signal will be too low.

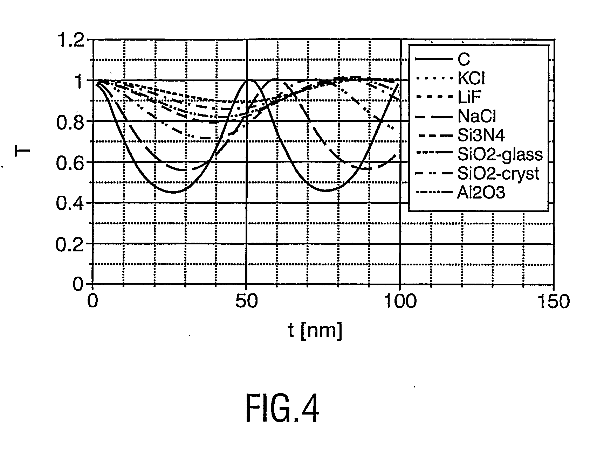

This illustrates that other dielectric materials than ZnS-SiO₂ are preferably required for an optical record carrier which shall be used in combination with UV light. Possible materials are obtained by a survey including sputter deposition and optical analysis. It has thus been found that a material from the following group of materials can be advantageously used as dielectric layer in optical record carriers according to the present invention: Al₂O₃, SiO₂, C, NaCl, ZrO, Si₃N₄ LiF, KCl. The materials can be doped to further improve the optical, thermal, and mechanical properties. Fig. 4 shows the transmission of some of the dielectric materials at 266 nm wavelength as a function of thickness.

As a suitable phase-change recording material to be used in the information layer alloys comprising at least two of the materials Ge, Sb, Te, In, Se, Bi, Ag, Ga, Sn, Pb, As have been found.

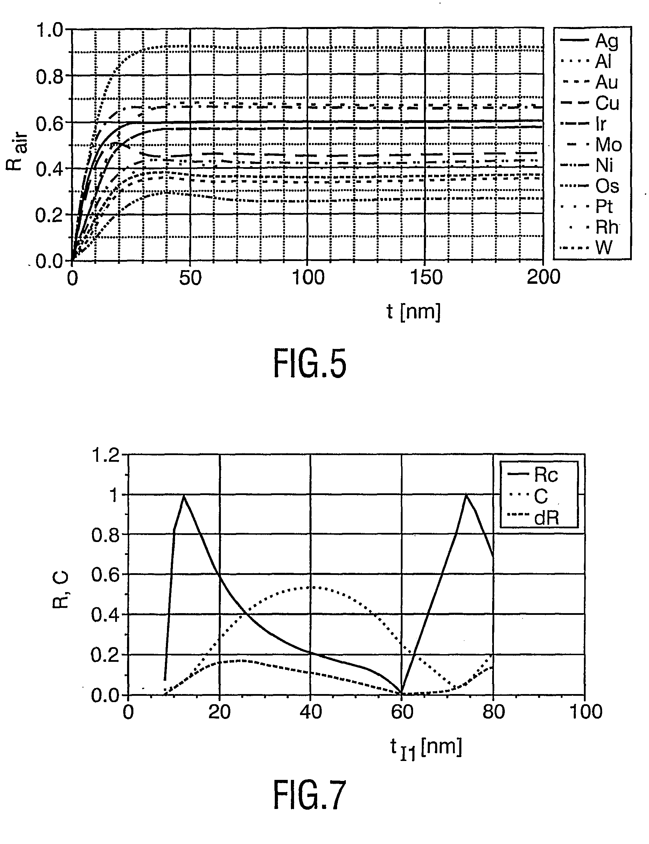

In addition to the dielectric layers and the phase-change layer metal heat sink layers can be provided which are required for quick heat removal (quenching) during writing to enable mark formation. Such metal layers also serve as a reflector to enhance the read-out of data and/or absorption of the incident light by the recording layer. The following materials or their alloys can be used in a recording stack for optical recording in the UV wavelength range: Al, Ag, Cu, Ag, Ir, Mo, Rh, Pt, Ni, Os, W. In Fig. 5 the reflection of some of these materials is given as a function of layer thickness at 266 nm wavelength.

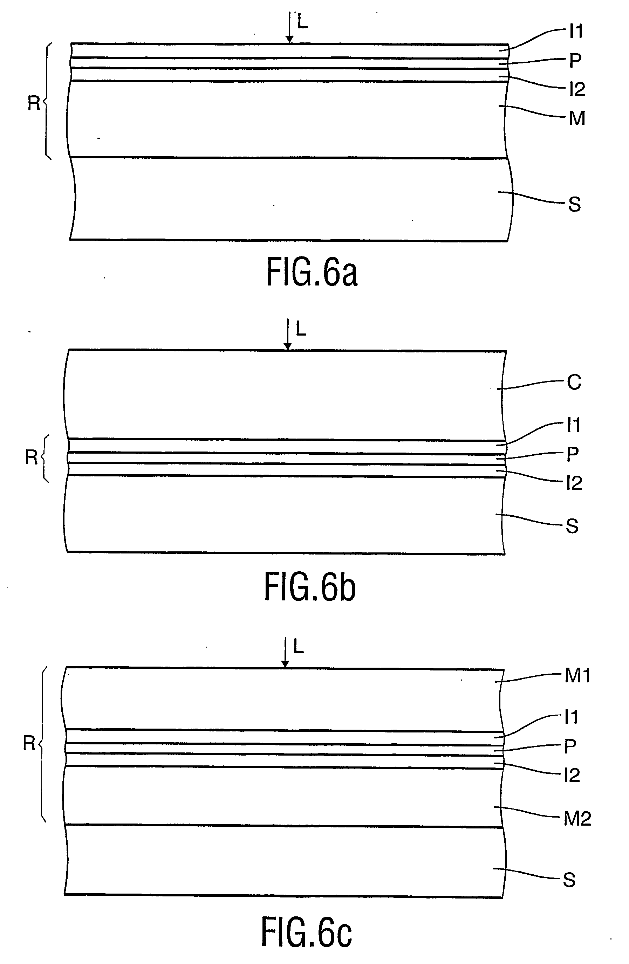

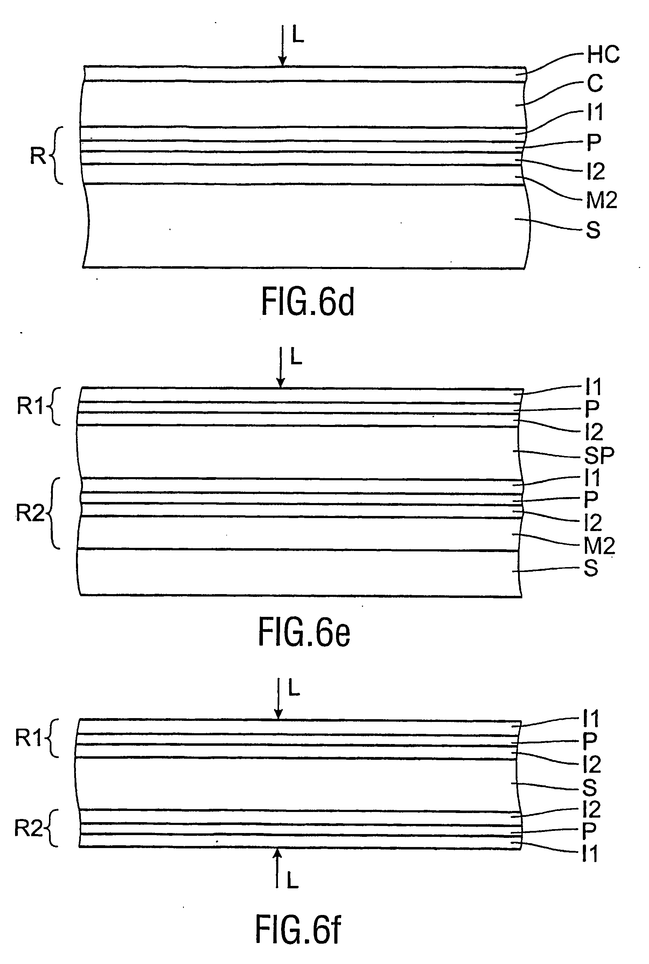

Different embodiments of optical record carriers according to the present invention are shown as cross-sections in Fig. 6. Fig. 6a shows a first layout of such a record carrier comprising an M/I2/P/I1 recording stack R where M is the reflector/ heat sink layer, P is a phase-change information layer and I1 and I2 are protective/interference layers (dielectric layers) or multi-layer structures. Generally the recording stacks can be of either low-to-high signal polarity, where reflection of the recorded state is higher than that of the unrecorded state, or high-to-low signal polarity, where reflection of the unrecorded state is higher than that of the recorded state.

Generally the thickness of the metal heat sink layer M should be larger than 10 nm, in particular larger than 15 nm. The thickness of the phase-change information layer P should be in the range from 3 to 50 nm, in particular from 5 to 25 nm. The thickness of the second dielectric layer 12 should be in the range from 2 to 50 nm, in particular from 3 to 25 nm. The thickness of the first dielectric layer I1 should be larger than 5 nm, in particular larger than 10 nm.

As an example, a recording stack with Si₃N₄ as dielectric layers I1, I2, A1 as metal heat sink layer M and In-doped Sb-Te alloy as a phase-change information layer P is preferably proposed. The stack design is M/I2/P/I1 as shown in Fig. 6a where M is the first layer deposited on the disc substrate S and where the UV laser beam L, preferably at a wavelength of 266 nm, enters the stack from the I1-layer side.

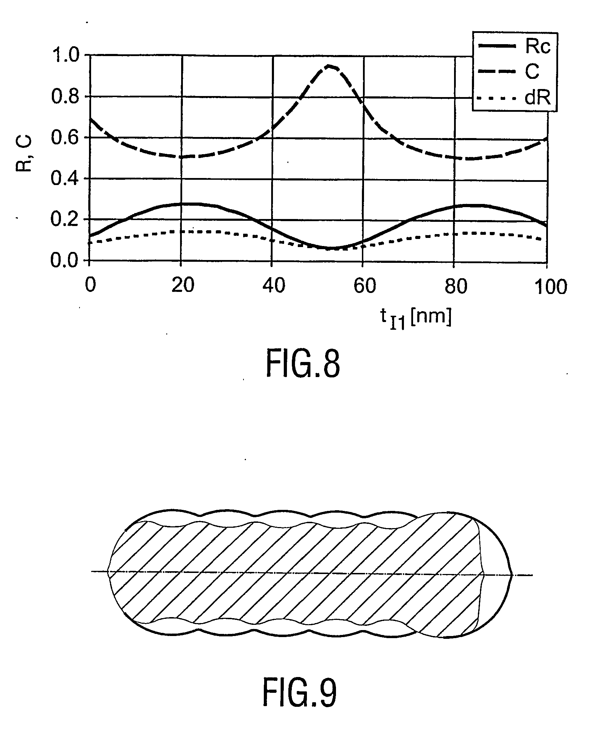

In Fig. 7 the optical characteristics of such an optical record carrier are shown. Crystalline (unrecorded state) reflection Rc, optical contrasts C and reflection difference dR are calculated as a function of the I1-layer thickness. The calculations are done for a stack with a 100 nm thick M-layer, 18 nm thick 12-layer and 10 nm thick P-layer. If the thickness of the I1-layer is chosen to be 14 nm the optical stack has 10.3 % reflection in the unrecorded state, 90 % optical contrast and 9.3 % reflection difference between the unrecorded area and recorded area on the disc.

Another embodiment of a record carrier according to the present invention is shown in Fig. 6b. Therein no metal heat sink layer is included. The I-layers can be multi-layer structures comprising dielectric materials with relatively high thermal conductivity. For protection of the recording stack, which is a so-called IPI stack, an additional cover layer C can be provided on top of the I1-layer. A preferred material for said cover layer is polydimethylsiloxane (Sylgard 184 Silicone Elastomer) and has a thickness in a range from 5 to 300 µm.

An optical record carrier comprising two metal heat sink layers M1 and M2 is shown in Fig. 6c. By this embodiment the optical contrast can be improved. The first heat sink layer M1 on which the laser beam is incident needs to be transparent or semi-transparent. Also the second heat-sink layer M2 can be transparent as well.

An optical record carrier comprising a cover layer C and a hard-coating layer HC is shown in Fig. 6d. By the hard-coating layer mechanical resistance of the record carrier can be improved. The hard-coating layer is preferably made of Si-, C-, or S-containing materials and has a thickness larger than 5 nm.

In Fig. 8 the optical performance of such a record carrier (without the hard-coating layer) is shown. Crystalline (unrecorded state) reflection (Rc), optical contrast (C) and reflection difference (dR) are calculated as a function of the I1-layer thickness. The calculations are done for a stack with 100nm thick M-layer, 30nm thick I2-layer, and 8nm thick P-layer. If the thickness of the I1-layer is chosen to be 50 nm the optical stack has 6.8% reflection in the unrecorded state, 92% optical contrast and 6.3% reflection difference between the unrecorded area and recorded area on the disc.

A multi-layer optical recording carrier comprising more than one recording stack is shown in Fig. 6e. As-depicted, the carrier has two recording stacks R1, R2 separated by a spacer layer SP. Such a record carrier has higher (in this case approximately twice) capacity than the record carrier comprising only one recording stack. All the recording stacks in such a record carrier are accessed by the incident UV light beam L from the same side of the record carrier.

A double-sided optical recording carrier comprising a recording stack R1, R2 on each side of the substrate is shown in Fig. 6f. As depicted, the record carrier has one recording stack R1, R2 per side of the substrate S. Such a record carrier has higher (in this case twice) capacity than the record carrier comprising only one recording stack. In such a carrier the recording stacks R1, R2 situated at the either side of the substrate S are accessed by the incident UV light beam L from the side of the substrate S which they are situated at. Double-sided multi-layer media can also be foreseen.

A pulse strategy with a 2ns write pulse was used to study mark formation in the proposed record carrier. The channel bit length was taken to be 44 nm. A typical modelling result is shown in Fig. 9. A pulse train of 6 write pulses with cooling gaps of 4 ns was applied. The recording velocity was 10 m/s. The solid line indicates the melt-edge. The hedged area is the recorded mark. The re-crystallization of amorphous material due to next write pulses is obvious and is in agreement with knowledge of mark formation for BD conditions. If the cooling gap is reduced, more re-crystallization will occur.

For recording a similar apparatus as used for BD carriers can be used.

According to the present invention a rewritable optical record carrier is proposed for use with a UV light beam for recording, preferably in a wavelength range from 230 to 270 nm. Together with a numerical aperture ofNA = 0.85, the effective spot radius (1/e of the approximate Gaussian distribution) of a system with λ=266 nm is R0=99 nm. If the effective spot area is considered it can be seen that a data capacity of 60 - 65 Gbyte is achievable for such record carriers. It can be further seen that the gained data capacity is too low for a lower numerical aperture (for instance NA=0.65) and that a numerical aperture of NA = 0.85 is required.

## Claims

1. An optical record carrier for recording information using a light beam (L) in the UV wavelength range, in particular having a wavelength in the range from 230 to 270nm, comprising a substrate layer (5) and a recording stack (R) comprising:
- two dielectric layers (31, 32) and
- an information layer (P) sandwiched between said dielectric layers, said information layer comprising a recording material for forming marks and spaces representing an information by irradiation of a UV light beam (L), wherein said recording material is an alloy comprising at least two materials of the group of materials containing Ge, Sb, Te, In, Se, Bi, Ag, Ga, Sn, Pb, As,
**characterized in that** said dielectric layers (31, 32) are made of a material of the group of materials containing C, NaCl, ZrO, LiF,KCl and
that a transparent cover layer (C) is provided on top of the side of the said record carrier facing the incident UV light beam (L), said cover layer being in particular made of polydimethylsiloxane and having a thickness in a range from 5 µm to 300 µm.

2. An optical record carrier as claimed in claim 1,
wherein said information layer (P) has a thickness in the range from 3 nm to 50 nm, in particular from 5 nm to 25 nm.

3. An optical record carrier as claimed in claim 1,
wherein said recording material is an In-doped Sb-Te alloy material.

4. An optical record carrier as claimed in claim 1,
wherein the dielectric layer (31) facing the incident UV light beam (4) has a thickness larger than 10 nm and the other dielectric layer (I2) has a thickness in the range from 2nm to 50nm, in particular from 3 nm to 25 nm.

5. An optical record carrier as claimed in claim 1,
further comprising a metal heat sink layer (M, M2) between said substrate layer (5) and said the dielectric layer (32) not facing the incident UV light beam (L).

6. An optical record carrier as claimed in claim 5,
wherein said metal heat sink layer (M, M2) has a thickness larger than 5 nm, in particular larger than 15nm.

7. An optical record carrier as claimed in claim 1,
further comprising a metal heat sink layer (M1) on top of the dielectric layer (31) facing the incident UV light beam (L), said metal heat sink layer (M1) being semitransparent.

8. An optical record carrier as claimed in claim 7,
wherein said metal heat sink layer has thickness in the range from 3 nm to 50 nm, in particular from 5 nm to 15 nm.

9. An optical record carrier as claimed in claim 5 or 7,
wherein said metal heat sink layers (M1, M2) are made of a material or an alloy based on a material of the group of materials containing Al, Ag, Cu, Ag, Ir, Mo, Rh, Pt, Ni, Os, W.

10. An optical record carrier as claimed in claim 5 or 7,
wherein said metal heat sink layers (M1, M2) are semi-transparent or transparent.

11. An optical record carrier as claimed in claim 1,
wherein the recording stack (R) further comprises additional dielectric layers or multi-layer structures on either or both of its sides.

12. An optical record carrier as claimed in claim 1,
further comprising at least one additional recording stack (R1, R2) and at least one transparent spacer layer (SP) for separating the recording stacks (R1, R2) from each other, said spacer layer (SP) being in particular made of polydimethylsiloxane and having a thickness in the range from 1 µm to 100 µm.

13. An optical record carrier as claimed in claim 1,
further comprising a transparent or semi-transparent hard-coating layer (HC) on top of the side of the said record carrier facing the incident UV light beam (L), said hard-coating layer (HC) having a thickness in the range from 5 nm to 300 µm.

## Patentansprüche

1. Optischer Aufzeichnungsträger zur Aufzeichnung von Informationen unter Verwendung eines Lichtstrahls (L) in dem UV-Wellenlängenbereich, vorzugsweise mit einer Wellenlänge im Bereich von 230 bis 270 nm, welcher aufweist:
- zwei dielektrische Schichten (31,32) und
- eine Informationsschicht (P), welche zwischen den dielektrischen Schicht angeordnet ist, wobei die Informationsschicht ein Aufzeichnungsmaterial zur Ausbildung von, eine Information darstellenden Marken und Leerstellen durch Bestrahlen eines UV-Lichtstrahls (L) enthält, wobei das Aufzeichnungsmaterial eine Legierung mit mindestens zwei Materialien der Gruppe, der Ge, Sb, Te, In, Se, Bi, Ag, Ga, Sn, Pb und As angehören, ist,
**dadurch gekennzeichnet, dass** die dielektrischen Schichten (31,32) aus einem Material der Materialgruppe, der C, NaCl, ZrO, LiF, KCI angehören, bestehen, und
dass eine durchlässige Deckschicht (C) auf der Oberseite der Seite des Aufzeichnungsträgers, welche dem einfallenden UV-Lichtstrahl (L) zugewandt ist, vorgesehen ist, wobei die Deckschicht vorzugsweise aus Polydimethylsiloxan besteht und eine Dicke in einem Bereich von 5 µm bis 300 µm aufweist.

2. Optischer Aufzeichnungsträger nach Anspruch 1, wobei die Informationsschicht (P) eine Dicke im Bereich von 3 nm bis 50 nm, vorzugsweise im Bereich von 5 nm bis 25 nm, aufweist.

3. Optischer Aufzeichnungsträger nach Anspruch 1, wobei das Aufzeichnungsmaterial ein In-dotiertes Sb-Te-Legierungsmaterial ist.

4. Optischer Aufzeichnungsträger nach Anspruch 1, wobei die dielektrische Schicht (31), welche dem einfallenden UV-Lichtstrahl (4) zugewandt ist, eine größere Dicke als 10 nm und die andere dielektrische Schicht (12) eine Dicke im Bereich von 2 nm bis 50 nm, vorzugsweise im Bereich von 3 nm bis 25 nm, aufweist.

5. Optischer Aufzeichnungsträger nach Anspruch 1, welcher weiterhin eine Metall-Wärmeableitschicht (M, M2) zwischen der Substratschicht (5) und der dielektrischen Schicht (32), welche dem einfallenden UV-Lichtstrahl (L) nicht zugewandt ist, aufweist.

6. Optischer Aufzeichnungsträger nach Anspruch 5, wobei die Metall-Wärmeableitschicht (M, M2) eine größere Dicke als 5 nm, vorzugsweise eine größere Dicke als 15 nm, aufweist.

7. Optischer Aufzeichnungsträger nach Anspruch 1, welcher weiterhin eine Metall-Wärmeableitschicht (M1) auf der Oberseite der dielektrischen Schicht (31), welche dem einfallenden UV-Lichtstrahl (L) zugewandt ist, aufweist, wobei die Metall-Wärmeableitschicht (M1) halbdurchlässig ist.

8. Optischer Aufzeichnungsträger nach Anspruch 7, wobei die Metall-Wärmeableitschicht eine Dicke im Bereich von 3 nm bis 50 nm, vorzugsweise im Bereich von 5 nm bis 15 nm, aufweist.

9. Optischer Aufzeichnungsträger nach Anspruch 5 oder 7, wobei die Metall-Wärmeableitschichten (M1, M2) aus einem Material oder einer Legierung auf der Basis eines Materials der Materialgruppe, der Al, Ag, Cu, Ag, Ir, Mo, Rh, Pt, Ni, Os, W angehören, vorgesehen sind.

10. Optischer Aufzeichnungsträger nach Anspruch 5 oder 7, wobei die Metall-Wärmeableitschichten (M1, M2) halbdurchlässig oder durchlässig sind.

11. Optischer Aufzeichnungsträger nach Anspruch 1, wobei der Aufzeichnungsstapel (R) weiterhin zusätzliche dielektrische Schichten oder Mehrschichtstrukturen auf einer oder beiden Seiten aufweist.

12. Optischer Aufzeichnungsträger nach Anspruch 1, welcher weiterhin mindestens einen zusätzlichen Aufzeichnungsstapel (R1, R2) und mindestens eine durchlässige Abstandsschicht (SP) aufweist, um die Aufzeichnungsstapel (R1, R2) voneinander zu trennen, wobei die Abstandsschicht (SP) vorzugsweise aus Polydimethylsiloxan vorgesehen ist und eine Dicke im Bereich von 1 µm bis 100 µm aufweist.

13. Optischer Aufzeichnungsträger nach Anspruch 1, welcher weiterhin eine durchlässige oder eine halbdurchlässige Hard-Coating-Schicht (HC) auf der Oberseite der Seite des Aufzeichnungsträgers, welche dem einfallenden UV-Lichtstrahl (L) zugewandt ist, aufweist, wobei die Hard-Coating-Schicht (HC) eine Dicke im Bereich von 5 nm bis 300 µm aufweist.

## Revendications

1. Support d'enregistrement optique pour enregistrement d'informations en utilisant un faisceau de lumière (L) dans la plage des longueurs d'ondes UV, ayant en particulier une longueur d'onde dans la plage de 230 à 270 nm, qui comprend une couche de substrat (5) et un empilement d'enregistrement (R) comprenant :
- deux couches diélectriques (31, 32) et
- une couche d'informations (P) prise en sandwich entre lesdites couches diélectriques, ladite couche d'informations comprenant un matériau d'enregistrement pour former, par irradiation par un faisceau de lumière UV (L), des marques et des espaces qui représentent des informations, où ledit matériau d'enregistrement est un alliage qui comprend au moins deux matériaux du groupe de matériaux contenant Ge, Sb, Te, In, Se, Bi, Ag, Ga, Sn, Pb, As,
**caractérisé en ce que** lesdites couches diélectriques (31, 32) sont faites d'un matériau du groupe de matériaux contenant C, NaCl, ZrO, LiF, KCI et
**en ce qu'**une couche de couverture transparente (C) est disposée au-dessus, du côté dudit support d'enregistrement qui fait face au faisceau incident de lumière UV (L), ladite couche de couverture étant en particulier faite en polydiméthylsiloxane et ayant une épaisseur dans une plage de 5 µm à 300 µm.

2. Support d'enregistrement optique selon la revendication 1,
dans lequel ladite couche d'informations (P) a une épaisseur dans une plage de 3 nm à 50 nm, en particulier de 5 nm à 25 nm.

3. Support d'enregistrement optique selon la revendication 1,
dans lequel ledit matériau d'enregistrement est un alliage Sb - Te dopé à In.

4. Support d'enregistrement optique selon la revendication 1,
dans lequel la couche diélectrique (31) qui fait face au faisceau incident de lumière UV (4) a une épaisseur supérieure à 10 nm et l'autre couche diélectrique (12) a une épaisseur dans une plage de 2 nm à 50 nm, en particulier de 3 nm à 25 nm.

5. Support d'enregistrement optique selon la revendication 1,
qui comprend en outre une couche de dissipation thermique en métal (M, M2) entre ladite couche de substrat (5) et ladite couche diélectrique (32) qui ne fait pas face au faisceau incident de lumière UV (L).

6. Support d'enregistrement optique selon la revendication 5,
dans lequel ladite couche de dissipation thermique en métal (M, M2) a une épaisseur supérieure à 5 nm, en particulier supérieure à 15 nm.

7. Support d'enregistrement optique selon la revendication 1,
qui comprend en outre une couche de dissipation thermique en métal (M1) au-dessus de la couche diélectrique (31) qui fait face au faisceau incident de lumière UV (L), ladite couche de dissipation thermique en métal (M1) étant semi-transparente.

8. Support d'enregistrement optique selon la revendication 7,
dans lequel ladite couche de dissipation thermique en métal a une épaisseur dans une plage de 3 nm à 50 nm, en particulier de 5 nm à 15 nm.

9. Support d'enregistrement optique selon la revendication 5 ou 7,
dans lequel lesdites couches de dissipation thermique en métal (M1, M2) sont faites en un matériau ou un alliage basé sur un matériau du groupe de matériaux contenant Al, Ag, Cu, Ag, Ir, Mo, Rh, Pt, Ni, Os, W.

10. Support d'enregistrement optique selon la revendication 5 ou 7,
dans lequel lesdites couches de dissipation thermique en métal (M1, M2) sont semi-transparentes ou transparentes.

11. Support d'enregistrement optique selon la revendication 1,
dans lequel l'empilement d'enregistrement (R) comprend en outre des couches diélectriques additionnelles ou des structures multicouches sur l'une ou les deux de ses faces.

12. Support d'enregistrement optique selon la revendication 1,
qui comprend en outre au moins un empilement d'enregistrement additionnel (R1, R2) et au moins une couche d'espacement transparente (SP) pour séparer les empilements d'enregistrement (R1, R2) l'un de l'autre, ladite couche d'espacement (SP) étant en particulier faite de polydiméthylsiloxane et ayant une épaisseur dans la plage de 1 µm à 100 µm.

13. Support d'enregistrement optique selon la revendication 1,
qui comprend en outre une couche de revêtement dur transparente ou semi-transparente (HC) au-dessus, du côté dudit support d'enregistrement qui fait face au faisceau incident de lumière UV (L), ladite couche de revêtement dur (HC) ayant une épaisseur dans la plage de 5 nm à 300 µm.
